(19) Europäisches Patentamt
European Patent Office
Office européen des brevets

(11) EP 1 379 583 B1

(12) EUROPÄISCHE PATENTSCHRIFT

(45) Veröffentlichungstag und Bekanntmachung des Hinweises auf die Patenterteilung:
**28.05.2008 Patentblatt 2008/22**

(21) Anmeldenummer: **02703634.2**

(22) Anmeldetag: **13.03.2002**

(51) Int Cl.:
***C08K 5/00*** *(2006.01)* ***C08L 69/00*** *(2006.01)*

(86) Internationale Anmeldenummer:
**PCT/EP2002/002721**

(87) Internationale Veröffentlichungsnummer:
**WO 2002/077087 (03.10.2002 Gazette 2002/40)**

# (54) NEUE POLYMERGEMISCHE

NOVEL POLYMER BLENDS

NOUVEAUX MELANGES POLYMERES

(84) Benannte Vertragsstaaten:
**AT BE CH CY DE DK ES FI FR GB GR IE IT LI LU MC NL PT SE TR**

(30) Priorität: **26.03.2001 DE 10114803**

(43) Veröffentlichungstag der Anmeldung:
**14.01.2004 Patentblatt 2004/03**

(73) Patentinhaber: **Bayer MaterialScience AG**
**51368 Leverkusen (DE)**

(72) Erfinder:
- **HAESE, Wilfried**
  **51519 Odenthal (DE)**
- **MASON, James**
  **Carnegie**
  **PA 15106 (US)**

(56) Entgegenhaltungen:
**EP-A- 0 492 550** **EP-A- 0 718 367**
**EP-A- 0 947 538** **WO-A-00/73387**
**WO-A-01/77206** **DE-A- 19 808 938**
**DE-A- 19 925 125**

- **DATABASE WPI Section Ch, Week 199816 Derwent Publications Ltd., London, GB; Class A23, AN 1998-175115 XP002210622 & JP 10 036645 A (POLYPLASTICS KK), 10. Februar 1998 (1998-02-10)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 379 583 B1

## Beschreibung

Die Anmeldung betrifft Optische Datenträger, hergestellt aus thermoplastischen Polymergemischen enthaltend Polycarbonat, Entformungsmittel und spezielle Phosphite insbesondere optische Datenträgern, wie z. B. Compact Disks, Video Disks, Digital Versatile Disks und weitere ein-oder mehrfach schreib- wie löschbare optische Datenträger.

Polycarbonate werden generell wegen ihrer besonderen Eigenschaftskombination wie Transparenz, Wärmeformbeständigkeit und Dimensionsstabilität als Materialien für den Spritzguss bzw. das Spritzprägen von optischen Datenträgern eingesetzt. Zur Verbesserung der Verarbeitbarkeit, die im allgemeinen bei Temperaturen im Bereich von 300°C bis 400°C stattfindet, werden dem Polycarbonat Additive, wie Entformungsmittel und Stabilisatoren zugesetzt.

Als Entformungsmittel werden dabei bevorzugt aliphatische Fettsäureester mehrwertiger Alkohole, wie z. B. Ester des Glycerins mit langkettigen Fettsäuren und des Pentaerythritols mit langkettigen Fettsäuren, eingesetzt. Diese Ester können auch teilverestert sein, besitzen dann freie OH-Gruppen, die für die entformende Wirkung offenbar vorteilhaft sind, allerdings verschlechtern diese Ester die Thermostabilität der Mischung so dass eine Notwendigkeit zum Zusatz von Stabilisatoren besteht. Dieser Stabilisator muß allerdings sehr effektiv wirken, d. h. in sehr geringen Konzentrationen wirksam sein, da andernfalls die Gefahr der Belagsbildung im Werkzeug besteht. In diesem Fall sind beim Verarbeiten öfter die Werkzeuge und Matrizen zu reinigen, was nachteilig ist und zu einer schlechteren Plattenqualität führt. Vollveresterte Entformungsmittel dagegen besitzen eine höhere Stabilität, allerdings ist die Entformungswirkung solcher Ester bei niedrigen Konzentrationen deutlich schwächer als die von Estern mit freien OH-Gruppen. Daher sind generell höhere Mengen an vollveresterten Entformungsmitteln einzusetzen, was die Gefahr der Belagsbildung erhöht, im Gegensatz dazu kann dann die Zusatzmenge an Stabilisator etwas geringer gewählt werden.

In der Literatur sind schon eine Vielzahl von Mischungen vorgeschlagen worden, wie:

Zur Stabilisierung von Gemischen, welche Entformungsmittel mit OH-Gruppen enthalten, lehrt die EP-A 205 192 Gemische aus Trimethylphosphat und/oder Triethylphosphat in Kombination mit Phosphiten einzusetzen. Die stabilisierende Wirkung der Phosphorsäureester bzw. der Phosphite allein reicht demnach nicht aus, weiterhin sind diese Phosphorsäureester als ökologisch bedenklich einzustufen.

Die JP-A 62184639 beschreibt optische Datenspeicher, die aus Polycarbonat, stabilisiert mit Phosphiten, gefertigt sind. Bevorzugt sind leichtflüchtige Phosphite, wie Trimethylphosphit, die ökologisch bedenklich sind und für die Belagsbildung kritisch sind.

Die JP-A 2000080261 beschreibt Polycarbonatmischungen mit Entformungsmittel, Tris(di-tert-butyl-phenyl) phosphite und Phosphorsäure. Die stabilisierende Wirkung des Phosphites ist demnach nicht ausreichend, so daß Phosphorsäure als weiterer Stabilisator eingesetzt wird, die jedoch Korrosion der Speicherschichten auf den optischen Datenträgern unter Bedingungen mit hoher Luftfeuchte und höherer Temperatur verursachen kann.

DE 199 25 125 A beschreibt Polycarbonatformmassen, die mindestens einen Thermostabilisator und ein Entformungsmittel enthalten und eine geringere Tendenz zur Staubanlagerung aufweisen. Datenträger hergestellt aus den Polymergemischen der vorliegenden Anmeldung werden nicht beschrieben.

Es bestand daher die Aufgabe optische Datenträger aus thermoplastichen Polymergemischen enthaltend Polycarbonat, Entformungsmittel und Thermostabilisator zu entwickeln, die in Hinblick auf die Herstellung der optischen Datenträger optimiert sind, also bspw. geringere Einsatzmengen bei guter Entformungswirkung ermöglichen. Insbesondere erfordert die neuen Diskformate mit höherer Speicherkapazität und gegebenenfalls geringerer Diskdicke, wie z. B. die Digital Versatile Disks (DVDs), eine höhere Thermostabilität im Vergleich zur CD. Auftretende Materialschädigung bei der Verarbeitung zu Formkörpern und Belagsbildung im Werkzeug werden kritischer.

Mit den erfindungsgemäßen Mischungen wird diese Aufgabe überraschenderweise durch eine verbesserte Qualität der Datenspeicher und eine verbesserte Verarbeitbarkeit des Materials im Spritzguss bzw. Spritzprägeverfahren gelöst.

Gegenstand der vorliegenden Anmeldung sind daher Optische Datenträger hergestellt aus thermoplastischen Polymergemischen enthaltend mindestens ein Polycarbonat, mindestens ein Entformungsmittel und mindestens ein Phosphit der folgenden Struktur:

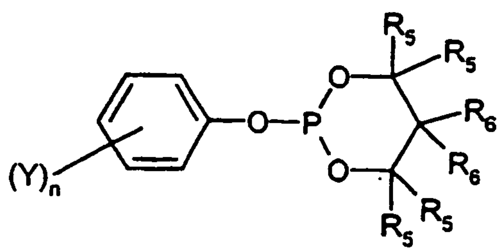

worin

n die Zahl 0-5, bevorzugt 1-3 darstellt und ganz besonders bevorzugt 3 darstellt,

Y jeweils unabhängig voneinander Alkyl oder gegebenenfalls substituiertes Aryl, bevorzugt $C_1$-$C_4$-Alkyl, besonders bevorzugt Methyl, sec.-Butyl und tert.-Butyl bedeutet,

$R_5$ unabhängig voneinander aus der Gruppe Wasserstoff und $C_3$-$C_{20}$-Alkyl ausgewählt wird, bevorzugt steht dabei mindestens ein $R_5$ für Alkyl,

$R_6$ unabhängig voneinander für $C_1$-$C_{10}$ Alkyl stehen.

Diese Phosphite stabilisieren das vorhandene Entformungsmittel bereits in niedrigen Konzentrationen und ermöglichen so eine niedrigere Dosierung der Entformungsmittel bei gleicher Entformungswirkung. Sowohl durch den geringeren Einsatz an Entformungsmitteln als auch deren überraschend erhöhte Stabilität verringert sich dadurch die Belagsbildung auf ein überraschend niedriges Niveau.

Optische Datenträgern sind z. B. Compact Disks, Video Disks, Digital Versatile Disks und weitere ein- oder mehrfach schreib- wie löschbare optische Datenträger.

Thermoplastische Polymergemische im Sinne der vorliegenden Erfindung enthalten überwiegend aromatische Polycarbonate. Unter Polycarbonate sind sowohl Homopolycarbonate als auch Copolycarbonate zu verstehen; die Polycarbonate können in bekannter Weise linear oder verzweigt sein. Sie weisen ein durch Gelpermeationschromatographie bestimmtes Gewichtsmittel des Molekulargewichts von 5.000 bis 80.000, vorzugsweise 10.000 bis 40.000 auf. Besonders bevorzugt liegt das Molekulargewicht zwischen 15000 und 35000, insbesondere 15000 und 22000.

Die Herstellung dieser Polycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan und 4,4'-(m-Phenylendiisopropyliden)diphenol.

Besonders bevorzugte Diphenole sind 2,2-Bis-(4-hydroxyphenyl)-propan (BPA), 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 4,4'-(m-Phenylendiisopropy-liden) bisphenol (CAS-No. 13595-25-0) (BPM), 1,1-Bis-(4-hydroxyphenyl)-cyclohexan und 1, 1 -Bis-(4-hydroxyphenyl)-3,3,5-trimethylcyclohexan (TMC).

Diese und weitere geeignete Diphenole sind z.B. in den US 3 028 635, 2 999 835, 3 148 172, 2 991 273, 3 271 367, 4 982 014 und 2 999 846, in den DE-A1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den JP-A 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Bevorzugt werden Polymergemische verwendet, die mindestens ein Polycarbonat mit Diolbausteinen aus BPA und/oder Trimethylcyclohexyl-bisphenol (TMC) enthalten, bevorzugt ausgewählt aus der Gruppe der Homopolymere des BPA, der Copolymere des BPA mit TMC oder der Copolymere mit 5 bis 60 Gew.-% TMC.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole

sind Phenol selbst, Alkylphenole wie Kresole, p-tert.-Butylphenol, p-n-Octylphenol, p-iso-Octylphenol, p-n-Nonylphenol und p-iso-Nonylphenol, p-Cumylphenol, Halogenphenole wie p-Chlorphenol, 2,4-Dichlorphenol, p-Bromphenol Amylphenol und 2,4,6-Tribromphenol sowie deren Mischungen.

Bevorzugte Kettenabbrecher sind die Phenole der Formel (I)

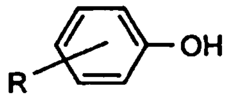

(I),

worin

R Wasserstoff, tert.-Butyl oder ein verzweigter oder unverzweigter $C_8$- und/oder $C_9$-Alkylrest ist. Aber auch p-Cumylphenol kann bevorzugt verwendet werden. Im Falle des Umesterungsverfahrens resultiert der Kettenabbrecher aus dem eingesetzten Diarylcarbonat.

Die Menge an einzusetzendem Kettenabbrecher, bevorzugt im Phasengrenzflächenverfahren, beträgt 0,1 mol% bis 5 mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydmxy phenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und für einige Anwendungen sogar bevorzugt 3,3-Bis-(3-methyl-4-hydroxyphenyl)-2-oxo-2,3-dihydroindol.

Die Menge der gegebenenfalls einzusetzenden Verzweiger beträgt 0,01 mol-% bis 2 mol-%, bezogen wiederum auf Mole an jeweils eingesetzten Diphenolen.

Die Verzweiger können im Phasengrenzflächenverfahren entweder mit den Diphenolen und den Kettenabbrechern in der wässrig alkalischen Phase vorgelegt werden, oder in einem organischen Lösungsmittel gelöst zugegeben werden. Im Falle des Umesterungsverfahrens können die Verzweiger zusammen mit den Diphenolen eingesetzt werden.

Alle diese Maßnahmen zur Herstellung der thermoplastischen Polycarbonate sind dem Fachmann geläufig.

Die als Entformungsmittel verwendeten Verbindungen sind vorzugsweise Ester mehrwertiger Alkohole mit langkettigen Carbonsäuren. Bevorzugt sind solche Entformungsmittel, die nicht vollständig verestert wurden, demnach freie OH-Grupperi aufweisen. Besonders bevorzugt sind (Teil-)Ester von gesättigten einwertigen Fettsäuren mit 16 bis 22 Kohlenstoffatomen mit Glycerin, Trimethylolpropan, Pentaerythrit oder ähnlichen mehrwertigen Alkoholen. Insbesondere Glycerinmonostearat und Glycerinmonopalmiat.

Solche gesättigten einwertigen Fettsäureester des Glycerins werden alleine oder als Mischungen mit zwei oder mehr Komponenten eingesetzt. Die gesättigten Monoester des Glycerins werden üblicherweise über die Umesterung von hydriertem tierischem oder pflanzlichem Öl mit Glycerin hergestellt. Obwohl das Reaktionsprodukt auch andere Ester als die Glycerinester enthalten kann, wird es als erfindungsgemäßes Entformungsmittel eingesetzt. Beispielsweise kann die Mischung kleine oder größere Anteile von Diglyceriden und Triglyceriden enthalten.

Das Optimum der Entformungsmittelmenge bei der Herstellung von CD's und anderen optischen Speichermedien (DVD's etc.) ist einerseits durch eine ausreichende entformende Wirkung, andererseits durch Belagsbildung auf dem Werkzeug bestimmt. Üblicherweise eingesetzte Konzentrationen liegen zwischen 50 bis 1000 ppm, vorteilhafter zwischen 100 und 500 ppm an Entformungsmittel. Für die übrigen Anwendungen von Polycarbonat liegen die Konzentrationen bei 100-10000 ppm, bevorzugt bei 2000-7000 ppm.

Bevorzugt sind Verbindungen der Formel

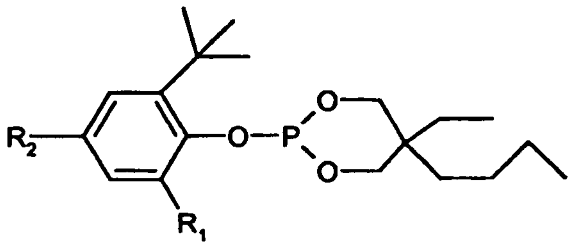

wobei $R_1$ und $R_2$ für Methyl, sec.-Butyl oder tert.-Butyl stehen.

Ebenfalls besonders bevorzugt sind außerdem die in EP A1 0 038 876 auf Seiten 16-20 definierten Verbindungen sowie das in der gleichen Schrift auf Seite 21 genannte Beispiel.

Ganz besonders bevorzugt ist (2,4,6-Tri-t-butylphenyl)-(2-butyl-2-ethyl-propan-1,3-diyl)-phosphit, welches folgende Struktur aufweist:

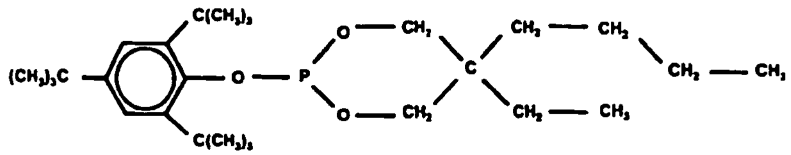

Die Phosphite können allein, jedoch auch in Kombination mit anderen Phosphorverbindungen eingesetzt werden, wobei die anderen Phosphorverbindungen auch solche sein können, die eine andere Oxidationszahl des Phosphors besitzen. Demnach können z. B. Kombinationen der erfindungsgemäßen Phosphite mit anderen Phosphiten, mit Phosphinen, z. B. Triphenylphosphin, mit Phosphoniten, mit Phosphaten, mit Phosphonaten usw. eingesetzt werden.

Die erfindungsgemäß eingesetzten Phosphite sind generell bekannt oder analog bekannter Phosphite herstellbar, (2,4,6-Tri-t-butylphenyl)-(2-butyl-2-ethyl-propan-1,3-diyl)-phosphit ist z. B. beschrieben in der EP-A 702018 und EP 635514.

Die erfindungsgemäßen Polymermischungen enthalten die Phosphorverbindung im allgemeinen zu einem Anteil von 10-5000 ppm, bevorzugt 10 - 1000 ppm, besonders bevorzugt 20 - 500 ppm, ganz besonders bevorzugt zwischen 50 und 250 ppm.

Bevorzugt, besonders bevorzugt oder ganz besonders bevorzugt sind Verbindungen, welche die unter bevorzugt, besonders bevorzugt oder ganz besonders bevorzugt genannten Substituenten tragen.

Die oben aufgeführten allgemeinen oder in Vorzugsbereichen aufgeführten Restedefinitionen bzw. Erläuterungen und Parameter bzw. Mengenverhältnisse können jedoch auch untereinander, also zwischen den jeweiligen Bereichen und Vorzugsbereichen beliebig kombiniert werden.

Der Zusatz der Entformungsmittel und der Phosphorverbindung zu den thermoplastischen Polymergemischen erfolgt beispielhaft und vorzugsweise, indem man sie nach der Herstellung und während der Aufarbeitung der Polycarbonate, z.B. durch Zugabe zu der Polycarbonat-Polymerlösung, oder einer Schmelze der thermoplastischen Polymergemische zudosiert. Weiterhin ist es auch möglich die Komponenten unabhängig voneinander in verschiedenen Arbeitsschritten zuzudosieren, z.B. eine der Komponenten während der Aufarbeitung der Polymerlösung und die andere (n) Komponente(n) in der Schmelze, solange gewährleistet ist, dass alle Komponenten bei der Herstellung der Endprodukte (Formkörper) enthalten sind.

Den erfindungsgemäß thermoplastischen Polymermischungen können weiterhin für Polycarbonate übliche Zusätze in den bekannten Mengen enthalten, wie beispielhaft und vorzugsweise Stabilisatoren gegen UV-Strahlung, Flammschutzmittel, Farbstoffe, Füllstoffe, Schaummittel, optische Aufheller und Antistatika. Bei optischen Anwendungen werden bevorzugt solche Komponenten genommen, die die Transparenz des Materials nicht negativ beeinflussen.

Diese Substanzen sind in vielen Veröffentlichungen zu finden wie etwa in Additives for Plastics Handbook, John Murphy, 1999 und im Handel erhältlich.

1. Geeignete Antioxidantien sind beispielsweise:

1.1. Alkylierte Monophenole, zum Beispiel 2,6-Di-tert-butyl-4-methylphenol, 2-tert-Butyl-4,6-dimethylphenol,

2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, die in der Seitenkette linear oder verzweigt sind, zum Beispiel, 2,6-Di-nonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol.

1.2. Alkylthiomethylphenole, zum Beispiel 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.

1.3. Hydrochinone und alkylierte Hydrochinone, zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis(3,5-di-tert-butyl-4-hydroxyphenyl)adipat.

1.4. Tocopherole, zum Beispiel α-Tocopherol, β-Tocopherol, γ-Tocopherol, δ-Tocopherol und Gemische davon (Vitamin E).

1.5. Hydroxylierte Thiodiphenylether, zum Beispiel 2,2'-Thiobis(6-tert-butyl-4-methylphenol), 2,2'-Thiobis(4-octylphenol), 4,4'-Thiobis(6-tert-butyl-3-methyl-phenol), 4,4'-Thiobis(6-tert-butyl-2-methylphenol), 4,4'-Thiobis (3,6-di-sec-amylphenol), 4,4'-Bis(2,6-dimethyl-4-hydroxyphenyl)disulfid.

1.6. Alkylidenbisphenole, zum Beispiel 2,2'-Methylenbis(6-tert-butyl-4-methylphenol), 2,2'-Methylenbis(6-tert-butyl-4-ethylphenol), 2,2'-Methylenbis[4-methyl-6-(α-methylcyclohexyl)phenol], 2,2'-Methylenbis(4-methyl-6-cyclohexylphe-nol), 2,2'-Methylenbis(6-nonyl-4-methylphenol), 2,2'-Methylenbis(4,6-di-tert-butyl-phenol), 2,2'-Ethylidenbis(4,6-di-tert-butylphenol), 2,2'-Ethylidenbis(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methylphenyl)-3-n-dodecylmercaptobutan, Ethylenglycolbis[3,3-bis(3'-tert-butyl-4'-hydroxyphenyl)butyrat], Bis(3-tert-butyl-4-hydroxy-5-methyl-phenyl)dicyclopentadien, Bis[2-(3'-tert-butyl-2'-hydroxy-5'-methylbenzyl)-6-tert-butyl-4-methylphenyl]terephthalat, 1,1-Bis(3,5-dimethyl-2-hydroxyphenyl)butan, 2,2-Bis(3,5-di-tert-butyl-4-hydroxyphenyl)propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.

1.7. O-, N- und S-Benzylverbindungen, zum Beispiel 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, Bis(4-tert-butyl-3-hydroxy-2,6-dimethylbenzyl)dithioterephthalat, Bis(3,5-di-tert-butyl-4-hydroxybenzyl)sulfid, Isooctyl-3,5-di-tert-butyl-4-hydroxybenzylmercaptoacetat.

1.8. Hydroxybenzylierte Malonate, zum Beispiel Dioctadecyl-2,2-bis(3,5-di-tert-butyl-2-hydroxybenzyl)malonat, Dioctadecyl-2-(3-tert-butyl-4-hydroxy-5-methylbenzyl)malonat, Didodecylmercaptoethyl-2,2-bis(3,5-di-tert-butyl-4-hydroxybenzyl) malonat, Bis[4-(1,1,3,3-tetramethylbutyl)phenyl]-2,2-bis(3,5-di-tert-butyl-4-hydroxybenzyl)malonat.

1.9. Aromatische Hydroxybenzylverbindungen, zum Beispiel 1,3,5-Tris-(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.

1.10. Triazinverbindungen, zum Beispiel 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylinercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris-(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropioyl)hexahydro-1,3,5-triazin, 1,3,5-Tris(3,5-dicyclohexyl-4-hydroxybenzyl)isocyanurat.

1.11. Acylaminophenole, zum Beispiel 4-Hydroxylauranilid, 4-Hydroxytearanilid, Octyl-N-(3,5-di-tert-butyl-4-hydroxyphenyl)carbamat.

1.12. Ester von β-(3,5-Di-tert-bulyl-4-hydroxyphenyl)propionsäure mit ein- oder mehrwertigen Alkoholen, z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, ganz besonders geeignet und bevorzugt ist dabei der Ester mit Octadecanol (IRGANOX 1076® der Ciba Spec.)

1.13. Ester von β-(5-tert-Butyl-4-hydroxy-3-methylphenyl)propionsäure mit ein- oder mehrwertigen Alkoholen, z.B. mit Methanol, Ethanol, n-Octanol, i-Oetanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.14. Ester von β-(3,5-Dicyclohexyl-4-hydroxyphenyl)propionsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl) isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.15. Ester von 3.5-Di-tert-butyl-4-hydroxyphenylessigsäure mit ein- oder mehrwertigen Alkoholen, z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

1.16. Amide of β-(3,5-Di-tert-butyl-4-hydroxyphenyl)Rropionsäure, z.B. N,N'-Bis-(3,5-di-tert-butyl-4-hydroxyphenylpropionyl)hexamethylendiamid, N,N'-Bis(3,5-di-tert-butyl-4-hydroxyphenylpropionyl)trimethylendiamid, N,N'-Bis(3,5-di-tert-butyl-4-hydroxyphenylpropionyl)hydrazid, N,N'-Bis[2-(3-[3,5-di-tert-butyl-4-hydroxyphenyl]-propionyloxy)ethyl]oxamid (Naugard® XL-1 von Uniroyal).

1.17. Ascorbinsäure (Vitamin C)

1.18. Aminische Antioxidantien, zum Beispiel N,N'-DÜsopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylen-diamin, N,N'-Bis(2-naphthyl)-p-phenylendiamin, N-Isopropyl-N'-phenyl-p-phenylen-diamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyl-diphenylamin, 4-n-Butylaminophenol, 4-Butyrylaminophenol, 4-Nonanoyl-aminophenol, 4-Dodecanoylaminophenol, 4-Octadecanoylaminophenol, Bis(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis[(2-methylphenyl)amino]ethan, 1,2-Bis(phenyl-amino)propan, (o-Tolyl)biguanid, Bis[4-(1',3'-dimethylbutyl)phenyl]amin, tert-octyliertes N-Phenyl-1-naphthylamin, ein Gemisch von mono- und dialkylierten tert-Butyl/tert-Octyldiphenylaminen, ein Gemisch von mono- und dialkylierten Nonyldiphenylaminen, ein Gemisch von mono- und dialkylierten Dodecyldiphenylaminen, ein Gemisch von mono- und dialkylierten Isopropyl/Isohexyldiphenylaminen, ein Gemisch von mono- und dialkylierten tert-Butyldiphenylaminen, 2,3-Dihydro-3,3-dimethyl-4H-1,4-benzothiazin, Phenothiazin, ein Gemisch von mono- und dialkylierten tert-Butyl/tert-Octylphenothiazinen, ein Gemisch von mono- und dialkylierten tert-Octylphenothiazinen, N-Allylphenothiazin, N,N,N',N'-Tetraphenyl-1,4-diaminobut-2-en, N,N-bis(2,2,6,6-tetramethylpiperid-4-ylhexamethylendiamin, Bis(2,2,6,6-tetramethylpiperid-4-yl)sebacat, 2,2,6,6-Tetramethylpiperidin-4-on, 2,2,6,6-Tetra-methylpiperidin-4-ol. Es können einzelne dieser Verbindungen oder Gemische derselben eingesetzt werden.

1.19 Geeignete Thiosynergisten sind zum Beispiel Dilaurylthiodipropionat und/oder Distearylthiodipropionat.

2. UV-Absorber und Lichtstabilisatoren können in den erfindungsgemäßen Zusammensetzungen in Mengen von 0,1 bis 15 Gew.-%, vorzugsweise 3 bis 8 Gew.%, bezogen auf die Masse der Zusammensetzung, eingesetzt werden.

Geeignete UV-Absorber und Lichtstabilisatoren sind beispielsweise:

2.1. 2-(2'-Hydroxyphenyl)benzotriazole, um Beispiel 2-(2'-Hydroxy-5'-methylphenyl)benzotriazol, 2-(3',5'-Di-tert-butyl-2'-hydroxyphenyl)benzotriazol, 2-(5'-tert-Butyl-2'-hydroxyphenylbenzotriazol, 2-(2'-Hydroxy-5'-(1,1,3,3-tetramethylbutyl) phenyl)benzo-triazol, 2-(3',5'-Di-tert-butyl-2'-hydroxyphenyl)-5-chlorbenzo-triazol, 2-(3'-tert-Butyl-2'-hydroxy-5'-methylphenyl)-5-chlorbenzotriazol, 2-(3'-sec-Butyl-5'-tert-butyl-2'-hydroxyphenyl)benzotriazol, 2-(2'-Hydroxy-4'-octyloxyphenyl)benzotriazol, 2-(3',5'-Di-tert-amyl-2'-hydroxyphenyl)benzotriazol, 2-(3',5'-Bis(α,α-dimethylbenzyl)-2'-hydroxyphenyl)benzotriazol, 2-(3'-tert-Butyl-2'-hydroxy-5'-(2-octyloxycarbonyl-ethyl)phenyl)-5-chlorbenzotriazol, 2-(3'-tert-Butyl-S'-[2-(2-ethyl-hexyloxy)carbonyl-ethyl]-2'-hydroxyphenyl)-5-chlorbenzotriazol, 2-(3'-tert-Butyl-2'-hydroxy-5'-(2-meth-oxycarbonylethyl)phenyl)-5-chlorbenzotriazol, 2-(3'-tert-Butyl-2'-hydroxy-5'-(2-methoxycarbonylethyl)phenyl)benzotriazol, 2-(3'-tert-Butyl-2'-hydroxy-S'-(2-octyl-oxycarbonylethyl)phenyl)benzotriazol, 2-(3'-tert-Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3'-tert-Butyl-2'-hydroxy-S'-(2-isooctyl-oxycarbonylethyl)phenylbenzotriazol, 2,2'-Methylenbis[4-(1,1,3,3-tetramethylbutyl)-6-benzotriazol-2-ylphenol]; das Umesterungsprodukt von 2-[3'-tert-Butyl-5'-(2-methoxycarbonylethyl)-2'-hydroxyphenyl]-2H-benzotriazol mit Polyethylenglycol 300; $[R-CH_2CH_2-COO-CH_2CH_2]_2$, wobei R = 3'-tert-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)phenyl]benzotriazol, 2-[2'-Hydroxy-3'-(1,1,3,3-tetramethylbutyl)-5'-(α,α -dimethylbenzyl)phenyl]benzotriazol.

2.2. 2-Hydroxybenzophenone, zum Beispiel die 4-Hydroxy-, 4-Methoxy-, 4-Octyloxy-, 4-Decyloxy-, 4-Dodecyloxy-, 4-Benzyloxy-, 4,2',4'-Trihydroxy- und 2'-Hydroxy-4,4'-dimethoxy-Derivate.

2.3. Ester von substituierten und unsubstituierten Benzoesäuren, wie zum Beispiel 4-tert-Butylphenylsalicylat, Phenylsalicylat, Octylphenylsalicylat, Bibenzoylresorcin, Bis(4-tert-butylbenzoyl)resorcin, Benzoylresorcin, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.

2.4. Acrylate, zum Beispiel Ethyl-α-cyan-β,β-diphenylacrylat, Isooctyl-α-cyan-β,β-diphenylacrylat, Methyl-α-carbomethoxycinnamat, Methyl-α-cyan-β-methyl-p-methoxycinnamat, Butyl-α-cyan-β-methyl-p-methoxycinnamat, Methyl-α-carbomethoxy-p-methoxycinnamat und N-(β-Carbomethoxy-β-cyanvinyl)-2-methylindolin.

2.5. Nickelverbindungen, zum Beispiel Nickelkomplexe von 2,2'-Thiobis[4-(1,1,3,3-tetramethylbutyl)phenol], wie der 1:1- oder 1:2-Komplex, mit oder ohne zusätzliche Liganden, wie n-Butylamin, Triethanolamin oder N-Cyclohexyldiethanolamin, Nickeldibutyldithiocarbamat, Nickelsalze der Monoalkylester, z.B. des Methyl- oder Ethylesters, von 4-Hydroxy-3,5-di-tert-butylbenzylphosphonsäure, Nickelkomplexe von Ketoximen, z.B. von 2-Hydroxy-4-methylphenylundecylketoxim, Nickelkomplexe von 1 -Phenyl-4-lauroyl-5-hydroxypyrazol, mit oder ohne zusätzliche Liganden.

2.6. Sterisch gehinderte Amine, zum Beispiel Bis(2,2,6,6-tetramethyl-4-piperidyl)sebacat, Bis(2,2,6,6-tetramethyl-4-piperidyl)succinat, Bis(1,2,2,6,6-pentamethyl-4-piperidyl)sebacat, Bis(1-octyloxy-2,2,6,6-tetramethyl-4-piperidyl)sebacat, Bis-(1,2,2,6,6-pentamethyl-4-piperidyl), n-Butyl-3,5-di-tert-butyl-4-hydroxy-benzylmalonat, das Kondensat von 1-(2-Hydroxyethyl)-2,2,6,6-tetramethyl-4-hydroxypiperidin und Bernsteinsäure, lineare oder cyclische Kondensate von N,N'-Bis(2,2,6,6-tetramethyl-4-piperidyl)hexamethylendiamin und 4-tert-Octylamino-2,6-dichlor-1,3,5-triazin, Tris(2,2,6,6-tetramethyl-4-piperidyl)nitrilotriacetat, Tetrakis(2,2,6,6-tetramethyl-4-piperidyl)-1,2,3,4-butantetracarboxylat, 1,1'-(1 ,2- Ethandiyl) bis-(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethyl-piperidyl) sebacat, Bis(1-octyloxy-2,2,6,6-tetramethylpiperidyl)succinat, lineare oder cyclische Kondensate von N,N'-Bis(2,2,6,6-tetramethyl-4-piperidyl)hexamethylendiamin und 4-Morpholino-2,6-dichlor-1,3,5-triazin, das Kondensat von 2-Chlor-4,6-bis(4-n-butylamino-2,2,6,6-tetramethylpiperidyl)-1,3,5-triazin und 1 ,2-Bis(3-aminopropyl-amino)-ethan, das Kondensat von 2-Chlor-4,6-bis (4-n-butylamino-1,2,2,6,6-pentamethylpiperidyl)-1,3,5-triazin und 1,2-Bis(3-aminopropylamino)ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)pyrrolidin-2,5-dion, ein Gemisch von 4-Hexadecyloxy- und 4-Stearyloxy-2,2,6,6-tetramethylpiperidin, ein Kondensationsprodukt von N,N'-Bis-(2,2,6,6-tetramethyl-4-piperidyl)hexamethylendiamin und 4-Cyclohexylamino-2,6-dichloro-1,3,5-triazin, ein Kondensationsprodukt von 1,2-Bis(3-aminopropylamino)-ethan und 2,4,6-Trichlor-1,3,5-triazin sowie 4-Butylamino-2,2,6,6-tetramethylpiperidin (CAS Reg. No. [136504-96-6]); N-(2,2,6,6-Tetramethyl-4-piperidyl)-n-dodecylsuccinimid, N-(1,2,2,6,6-Pentamethyl-4-piperidyl)-n-dodecyl-succinimid, 2-Undecyl-7,7,9,9-tetramethyl-1-oxa-3,8-diaza-4-oxospiro[4.5]decan, ein Reaktionsprodukt von 7,7,9,9-Tetramethyl-2-cycloundecyl-1-oxa-3,8-diaza-4-oxospiro[4.5]decan und Epichlorhydrin, 1,1-Bis(1,2,2,6,6-pentamethyl-4-piperidyl-oxycarbonyl)-2-(4-methoxyphenyl)ethen, N,N'-Bis(formyl)-N,N'-bis(2,2,6,6-tetra-methyl-4-piperidyl)-hexamethylendiamin, Diester von 4-Methoxymethylenmalonsäure mit 1,2,2,6,6-Pentamethyl-4-hydroxypiperidin, Poly[methylpropyl-3-oxy-4-(2,2,6,6-tetramethyl-4-piperidyl)]siloxan, Reaktionsprodukt von Maleinsäureanhydrid-α-Olefin-Copolymer mit 2,2,6,6-Tetramethyl-4-aminopiperidin oder 1,2,2,6,6-Pentamethyl-4-aminopiperidin.

2.7. Oxamide, zum Beispiel 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl) oxamid, 2-Ethoxy-5-tert-butyl-2'-ethoxanilid und dessen Gemisch mit 2-Ethoxy-2'-ethyl-5,4'-di-tert-butoxanilid, Gemische von o- und p-Methoxy-disubstituierten Oxaniliden und Gemische von o- und p-Ethoxy-disubstituierten Oxaniliden.

2.8. 2-(2-Hydroxyphenyl)-1,3,5-triazine, zum Beispiel 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxy-phenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

Es können einzelne dieser Verbindungen oder Gemische derselben eingesetzt werden.

3. Geeignete Metalldesaktivatoren sind zum Beispiel N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxalyldihydrazid, N,N'-Bis(salicyloyl)thiopropionyldihydrazid. Es können einzelne dieser Verbindungen oder Gemische derselben eingesetzt werden.

4. Geeignete Peroxidfänger sind zum Beispiel Ester von β-Thiodipropionsäure, zum Beispiel der Lauryl-, Stearyl-, Myristyl- oder Tridecylester, Mercaptobenzimidazol oder das Zinksalz von 2-Mercaptobenzimidazol, Zinkdibutyldithiocarbamat, Dioctadecyldisulfid, Pentaerythrittetrakis(dodecylmercapto)propionat. Es können einzelne dieser Verbindungen oder Gemische derselben eingesetzt werden.

5. Geeignete basische Costabilisatoren sind zum Beispiel Melamin, Polyvinylpyrrolidon, Dicyandiamid, Triallylcyanurat, Harnstoffderivate, Hydrazinderivate, Amine, Polyamide, Polyurethane, Alkalimetallsalze und Erdalkalimetallsalze höherer Fettsäuren, zum Beispiel Calciumstearat, Zinkstearat, Magnesiumbehenat, Magnesiumstearat, Natriumricinoleat und Kaliumpalmitat, Antimonpyrocatecholat oder Zinkpyrocatecholat. Es können einzelne dieser Verbindungen oder Gemische derselben eingesetzt werden.

6. Geeignete Keimbildner sind zum Beispiel anorganische Substanzen, wie Talk, Metalloxide, wie Titandioxid oder Magnesiumoxid, Phosphate, Carbonate oder Sulfate, vorzugsweise von Erdalkalimetallen; organische Verbindungen, wie Mono- oder Polycarbonsäuren und deren Salze, z.B. 4-tert-Butylbenzoesäure, Adipinsäure, Diphenylessigsäure, Natriumsuccinat oder Natriumbenzoat; polymere Verbindungen, wie ionische Copolymere (Ionomere). Besonders bevorzugt sind 1,3:2,4-Bis(3',4'-dimethylbenzyliden)sorbit, 1,3:2,4-Di(paramethyldibenzyliden)sorbit und 1,3:2,4-Di-(benzyliden)sorbit. Es können einzelne dieser Verbindungen oder Gemische derselben eingesetzt werden.

7. Geeignete Füllstoffe und Verstärkungsmittel sind zum Beispiel Calciumcarbonat, Silicate, Glasfasern, Glasballons, Asbest, Talk, Kaolin, Glimmer, Bariumsulfat, Metalloxide und -hydroxide, Ruß, Graphit, Wollastonit, Holzmehl und Mehle oder Fasern anderer Naturprodukte, synthetische Fasern. Es können einzelne dieser Verbindungen oder

Gemische derselben eingesetzt werden.

8. Geeignete andere Additive sind zum Beispiel Weichmacher, Gleitmittel, Emulgatoren, Pigmente, Viskositätsmodifikatoren, Katalysatoren, Verlaufmittel, optische Aufheller, Flammschutzmittel, antistatische Mittel und Treibmittel.

9. Geeignete Benzofuranone und Indolinone sind zum Beispiel diejenigen, die in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 oder EP-A-0591102 offenbart sind, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]benzofuran-2-on, 3,3'-Bis[5,7-di-tert-butyl-3-(4-[2-hydroxyethoxy]phenyl)benzofuran-2-on], 5,7-Di-tert-butyl-3-(4-ethoxyphenyl)benzofuran-2-on, 3-(4-Acetoxy-3,5-dimethylphenyl)-5,7-di-tert-butylbenzofuran-2-on, 3-(3,5-Dimethyl-4-pivaloyloxyphenyl)-5,7-di-tert-butylbenzo-furan-2-on, 3-(3,4-Dimethylphenyl)-5,7-di-tert-butylbenzofuran-2-on, 3-(2,3-Dimethylphenyl)-5,7-di-tert-butylbenzofuran-2-on, Lacton-Antioxidantien wie

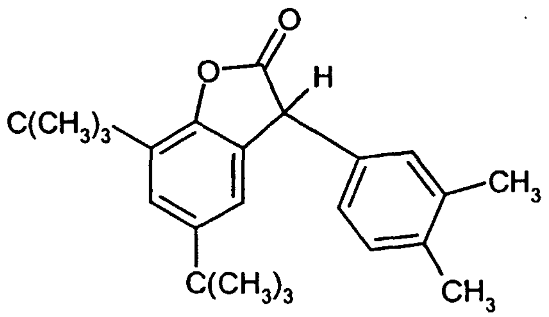

(8)

Diese Verbindungen wirken beispielsweise als Antioxidantien. Es können einzelne dieser Verbindungen oder Gemische derselben eingesetzt werden.

10. Geeignete fluoreszierende Weichmacher sind die in "Plastics Additives Handbook", Hrsg. R. Gächter und H. Müller, Hanser Verlag, 3. Aufl., 1990, Seite 775-789 aufgeführten.

11. Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie Salze, wie $C_4F_9SO_3^-Na^+$.

12. Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

13. Geeignete Polymere sind SAN, ABS, PMMA, PTFE, PSU, PPS, Polyolefine, wie Polyethylen, Polypropylen und Ethylen-Propylen-Kautschuke, Epoxyharze, Polyester, wie PBT, PET, PCT, PCTG und PETG sowie andere im Grenzflächenverfahren erzeugte Polycarbonate.

14. Geeignete antistatische Mittel sind Sulfonatsalze beispielsweise Tetraethylammoniumsalze von $C_{12}H_{25}SO^{3-}$ oder $C_8F_{17}SO^{3-}$.

15. Geeignete Färbemittel sind Pigmente sowie organische und anorganische Farbstoffe.

16. Verbindungen, die Epoxygruppen enthalten, wie 3,4-Epoxycyclohexylmethyl-3,4-epoxycyclohexylcarboxylat, Copolymere von Glycidylmethacrylat und Epoxysilane.

17. Verbindungen, die Anhydridgruppen, wie Maleinsäureanhydrid, Bernsteinsäureanhydrid, Benzoesäureanhydrid und Phthalsäureanhydrid.

18. Als Stabilisatoren geeignete Phosphite und Phosphonites sind zum Beispiel Triphenylphosphit, Diphenylalkylphosphite, Phenyldialkylphosphite, Tris(nonylphenyl)phosphit, Trilaurylphosphit, Trioctadecylphosphit, Distearylpentaerythritdiphosphit, Tris(2,4-di-tert-butylphenyl)phosphit, Diisodecylpentaerythritdiphosphit, Bis-(2,4-di-tert-butylphenyl)pentaerythritdiphosphit, Bis(2,6-di-tert-butyl-4-methylphenyl)pentaery-thritdiphosphit, Diisodecyloxypentaerythritdiphosphit, Bis(2,4-di-tert-butyl-6-methylphenyl)pentaerythritdiphosphit, Bis(2,4,6-tris(tert-butylphenyl)pentaerythrit-diphosphit, Tristearylsorbittriphosphit, Tetrakis(2,4-di-tert-butylphenyl)-4,4'-biphenylendiphosphonit, 6-Isooctyloxy-2,4,8,10-tetta-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)methylphosphit, Bis-(2,4-di-tert-butyl-6-methylphenyl)ethylphosphit, 6-Fluor-2,4,8,10-tetra-tert-butyl-12-methyldibenz[d,g]-1,3,2-dioxaphosphocin, 2,2',2''-Nitrilo[triethyltris(3,3', 5,5'tetra-tert-butyl-1,1'-biphenyl-2,2'-diyl)phosphit], 2-Ethyl-hexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran. Es können einzelne dieser Verbindungen oder Gemische derselben eingesetzt werden.

Besonders bevorzugt sind Tris(2,4-di-tert-butylphenyl)phosphit (Irgafos® 168, Ciba-Geigy), oder Triphenylphosphin.

Die Verbindungen der Gruppen 16 und 17 wirken als Schmelzestabilisatoren. Sie können einzeln oder in Gemischen eingesetzt werden.

Der Fachmann wird für Anwendungen im Bereich der CD, DVD und anderer optischer Aufzeichnungsmedien aus den oben genannten Additiven selbstverständlich geeignete, die Transparenz nicht beeinträchtigende Additive auswählen.

Ganz besonders geeignete Additive sind IRGANOX 1076 ®, s.o. und Benzotriazole der Gruppe 2.1 (sog. Tinuvine), insbesondere in Mischung miteinander.

Die erfindungsgemäßen Polymergemische werden in der für Polycarbonate bekannten Weise zur Herstellung von optischen Datenträgen verwandt. Insbesondere zur Herstellung von Compact Discs und DVD's sowie einmal- oder mehrfach beschreibbaren bzw. löschbaren optischen Medien. Die beschreibbaren Schichten bestehen dabei insbesondere aus Farbstoffen oder metallischen Schichten, wobei letztere als Aufzeichnungsprinzip den Wechsel vom amorphen in den kristallinen Zustand benutzen oder magnetische Eigenschaften besitzen.

Diese Herstellung der optischen Medien erfolgt vorzugsweise aus den fertig hergestellten, erfindungsgemäßen Polymergemischen, die beispielsweise als Granulat anfallen. Die Herstellung der optischen Medien kann aber auch durch Einarbeitung der Komponenten zu reinen oder handelsüblichen Polycarbonaten und/oder zu den bei der Herstellung von Formkörpern aus Polycarbonaten üblichen Zusätzen erfolgen.

Die erfindungsgemäßen thermoplastischen Polymergemische haben den Vorteil, dass sie eine bessere Thermostabilität bei der Herstellung von optischen Datenträgern besitzen und die erhaltenen Endprodukte (Formkörper) leicht von den Herstellungswerkzeugen getrennt werden können und keine Verunreinigungen auf den Werkzeugen hinterlassen.

Die nachfolgende Beispiele dienen zur Erläuterung der Erfindung. Die Erfindung ist nicht auf die Beispiele beschränkt.

**Beispiele:**

**Beispiele für Polycarbonat, hergestellt nach dem Phasengrenzflächenverfahren**

Folgende Mischungen wurden hergestellt:

Entsprechend der untenstehenden Tabelle werden x Gewichtsanteile Polycarbonatgranulat aus BPA-PC mit tert.-Butylphenol-Endgruppen, hergestellt nach dem Phasengrenzflächenverfahren, und einer mittleren Lösungsviskosität von 1,195 (gemessen in Methylenchlorid bei 25°C und einer Konzentrationvon 0,5 g in 100 ml Methylenchlorid) mit y Gewichtsanteilen Glycerinmonostearat und z Gewichtsanteilen Phosphorverbindung in einem geschlossenen Behälter intensiv durchmischt. Anschließend wird die Mischung auf einem Zwei-Schnecken-Kneter des Typs Werner Pfleiderer ZSK 53 bei einer Massetemperatur von ca. 240°C compoundiert.

**Tabelle 1 (Zusammensetzungen)**

| | Polycarbonat | Glycerinmonostearat | Phosphit 1 | Phosphit 2 |
|---|---|---|---|---|
| Beispiel 1 | 99,955 | 0,04 | 0,005 | |
| Beispiel 2 | 99,95 | 0,04 | 0,01 | |
| Vergleichsbeispiel 1 | 99,955 | 0,04 | | 0,005 |

(fortgesetzt)

| | Polycarbonat | Glycerinmonostearat | Phosphit 1 | Phosphit 2 |
|---|---|---|---|---|
| Vergleichsbeispiel 2 | 99,95 | 0,04 | | 0,01 |
| Vergleichsbeispiel 3 (ohne Stabilisator) | 99,96 | 0,04 | 0 | 0 |

Als Glycerinmonostearat wird das Produkt Loxiol EP 129 der Henkel KgaA eingesetzt. Phosphit 1 ist (2,4,6-Tri-tert.-butyl-phenyl)-(2-butyl-2-ethyl-propan-1,3-diyl)-phosphit, welches unter dem Handelsnamen Ultranox 641® von GE Specialty Chemicals angeboten wird. Phosphit 2 ist Tris(2,4-di-tert-butylphenyl)phosphit, das als Irgafos® 168 von Ciba-Geigy angeboten wird.

Anschließend werden zur Messung der Produktstabilität CDs auf einer CD- Spritzgießmaschine des Typs Netstal Discjet 600 CD-Rohlinge aus den oben beschriebenen Materialien hergestellt. Die CDs besitzen eine Dicke von 1,2 mm und einen Außendurchmesser von 120 mm. Die Produktstabilität wird dabei unter unterschiedlichen Maschinenbedingungen, im folgenden als Einstellung 1 bis 4 bezeichnet, geprüft:

Einstellung 1:

Zylindertemperaturen (Einzug/Kompression/Zylinderkopf/Düse) 315 / 320 / 320 /320°C; maximale Einspritzgeschwindigkeit: 130 mm/sec; Werkzeug (Vorlauftemperatur): 55°C; Zykluszeit: 4,6 sec

Einstellung 2:

Zylindertemperaturen (Einzug/Kompression/Zylinderkopf/Düse) 315 / 340 / 350 /350°C; maximale Einspritzgeschwindigkeit: 110 mm/sec; Werkzeug (Vorlauftemperatur): 55°C; Zykluszeit: 4,9 sec

Einstellung 3:

Zylindertemperaturen (Einzug/Kompression/Zylinderkopf/Düse) 315 / 360 / 380 /380°C; maximale Einspritzgeschwindigkeit: 100 mm/sec; Werkzeug (Vorlauftemperatur): 55°C; Zykluszeit: 5,5 sec

Einstellung 4:

entsprechend Einstellung 2, wobei jedoch der Zyklus durch einen 5-minütigen Maschinenstopp unterbrochen wird. Die jeweils fünfte Platte nach Wiederanfahren der Spritzgießmaschine wird für die nachfolgenden Messungen genommen.

An den CD-Rohlingen wird anschließend der verbleibende Gehalt an Glycerinmonostearat und der Gehalt an phenolischen OH-Gruppen bestimmt. Es werden folgende Ergebnisse erhalten:

**Tabelle 2 (GMS-Bestimmungen)**

| (GMS-Konzentrationen in ppm in der CD nach Herstellung unter unterschiedlichen Bedingungen) | | | | |
|---|---|---|---|---|
| | Einstellung 1 | Einstellung 2 | Einstellung 3 | Einstellung 4 |
| Beispiel 1 | 305 | 285 | 280 | 255 |
| Beispiel2 | 355 | 315 | 300 | 290 |
| Vergleichsbeispiel 1 | 290 | 270 | 255 | 195 |
| Vergleichsbeispiel2 | 320 | 290 | 265 | 210 |
| Vergleichsbeispiel ohne Thermostabitisator | 285 | 255 | 205 | 140 |

Weiterhin wird die Konzentration an phenolischem OH in der CD nach Herstellung unter unterschiedlichen Bedingungen gemessen

**Tabelle 3 (Messungen phenolisches OH)**

| (Konzentration an phenolischem OH in ppm in der CD nach Herstellung unter unterschiedlichen Bedingungen | | | | |
|---|---|---|---|---|
| | Einstellung 1 | Einstellung 2 | Einstellung 3 | Einstellung 4 |
| Beispiel 1 | 120 | 130 | 130 | 140 |
| Beispiel 2 | 105 | 120 | 125 | 130 |
| Vergleichsbeispiel 1 | 120 | 135 | 135 | 150 |
| Vergleichsbeispiel 2 | 120 | 135 | 140 | 150 |
| Vergleichsbeispiel 3 | 125 | 145 | 155 | 175 |

**Tabelle 4 (Belagstest)**

| | Belagsbildung |
|---|---|
| Beispiel 1 | gering |
| Beispiel 2 | gering |
| Vergleichsbeispiel 1 | gering |
| Vergleichsbeispiel 2 | mittel |
| Vergleichsbeispiel 3 | hoch |

Die Belagsbildung wurde wie folgt ermittelt: Zur Bestimmung von Belägen im Werkzeug wurden auf der CD-Spritzgießmaschine des Typs Netstal Discjet 600 mit einem Axxicon-CD-Werkzeug je 1000 teilgefüllte CD-Rohlinge hergestellt. Die ca. 80 %ige Teilfüllung der CDs wird durch die Reduzierung des Dosierweges mit Anpassung des Nachdruckes erreicht. Dabei liegen die Zylindertemperaturen in der Einzugszone bei 300°C, in der Kompressionszone bei 310°C, am Zylinderkopf und an der Düse herrschte eine Temperatur von 330°C. Die Zykluszeit liegt bei ca 5,5 Sekunden. Nach den 1000 Schuss wird die Oberfläche der Matrize und des Spiegels im Außenbereich, also dem Bereich, der nicht mit der Polycarbonatschmelze in Berührung kommt, visuell auf Belagsbildung untersucht. Obige Resultate wurden erhalten.

**Beispiele für Polycarbonat, hergestellt nach dem Schmelzumesterungsverfahren**

Entsprechend der untenstehenden Tabelle werden x Gewichtsanteile Polycarbonatgranulat aus BPA-PC mit Phenol-Endgruppen, hergestellt nach dem Schmelzumesterungsverfahren, und einer mittleren Lösungsviskosität von 1,200 (gemessen in Methylenchlorid bei 25°C und einer Konzentrationvon 0,5 g in 100 ml Methylenchlorid) mit y Gewichtsanteilen Glycerinmonostearat und z Gewichtsanteilen Phosphorverbindung in einem geschlossenen Behälter intensiv durchmischt. Anschließend wird die Mischung auf einem Zwei-Schnecken-Kneter des Typs Werner Pfleiderer ZSK 53 bei einer Massetemperatur von ca. 240°C compoundiert.

**Tabelle 1 (Zusammensetzungen)**

| | Polycarbonat | Glycerinmonostearat | Phosphit 1 | Phosphit 2 |
|---|---|---|---|---|
| Beispiel 1 | 99,06 | 0,03 | 0,01 | |
| Vergleichsbeispiel 1 | 99,06 | 0,03 | | 0,01 |
| Vergleichsbeispiel 2 (ohne Stabilisator) | 99,07 | 0,03 | | |

Als Glycerinmonostearat wird das Produkt Loxiol EP 129 der Henkel KgaA eingesetzt. Phosphit 1 ist (2,4,6-Tri-tert.-butyl-phenyl)-(2-butyl-2-ethyl-propan-1,3-diyl)-phosphit, welches unter dem Handelsnamen Ultranox 641® von GE Specialty Chemicals angeboten wird. Phosphit 2 ist Tris(2,4-di-tert-butylphenyl)phosphit, das als Irgafos® 168 von Ciba-Geigy angeboten wird.

Anschließend werden zur Messung der Produktstabilität CDs auf einer CD- Spritzgießmaschine des Typs Netstal Discjet 600 CD-Rohlinge aus den oben beschriebenen Materialien hergestellt. Die CDs besitzen eine Dicke von 1,2 mm und einen Außendurchmesser von 120 mm. Die Produktstabilität wird dabei unter der Maschineneinstellung 3

des vorne beschriebenen Verarbeitungsprogrammes geprüft.

An den CD-Rohlingen wird anschließend der verbleibende Gehalt an Glycerinmonostearat bestimmt. Es werden folgende Ergebnisse erhalten:

**Tabelle 2 (GMS-Bestimmungen)**

| (GMS-Konzentrationen in ppm in der CD nach Herstellung unter unterschiedlichen Bedingungen) | |
|---|---|
| | Einstellung 3 |
| Beispiel 1 | 285 |
| Vergleichsbeispiel 1 | 195 |
| Vergleichsbeispiel 2 ohne Thermostabilisator | 180 |

**Tabelle 3 (Belagstest)**

| | Belagsbildung (%) |
|---|---|
| Beispiel 1 | 0,049 |
| Vergleichsbeispiel 1 | 0,099 |
| Vergleichsbeispiel 2 | 0,160 |

Messung der Kondensatmenge:

Die Erfassung der Kondensatmenge erfolgt durch die Wägung einer Aluminiumfolie mit und ohne Belag. Dabei wird die Belagmenge wie folgt definiert:

$$\text{Kondensatmenge in \%} = (\text{Gew. Folie}_{\text{n. d. Messung}} - \text{Folie}_{\text{vor d. Messung}})/\text{Probengewicht} * 100\%$$

Beschreibung des Verfahrens im Detail:

Nach der Trocknung (120°C, 4 h) wird das 20 g Granulat in ein Schälchen aus Aluminium mit 80 mm Durchmesser und 15mm Tiefe, so eingefüllt, dass der Boden des Schälchens gleichmäßig mit Granulat bedeckt ist. Das befüllte Schälchen wird in einen dafür vorgesehenen Probenraum (85 mm Durchmesser, 50mm Tiefe) eines elektrisch beheizbaren Metallblocks eingebracht und mit einer Aluminiumfolie, 0,03 mm Dicke, 100 mm Durchmesser, verschlossen. Damit die flüchtigen Bestandteile auf der Folie kondensieren können, wird diese während der Messung durch eine Kühlplatte gekühlt. Die Temperatur des Kühlwassers ist auf 20°C eingestellt. Bei der Durchführung der Messung ist zu beachten, dass die Folie den Probenraum gut nach außen hin abdichtet.

Der Metallblock wird in wenigen Minuten auf eine Temperatur von 300°C aufgeheizt. Bei dieser Temperatur verharrt die Probe 4 h, anschließend wird die Prüfapparatur auf Umgebungstemperatur heruntergekühlt. Nach Erreichen der Umgebungstemperatur wird die Aluminiumfolie abgenommen und auf einer Mikrowaage ausgewogen und die Kondensatmenge entsprechend der Definition berechnet.

**Beschreibung der Messmethoden im einzelnen:**

Glycerinmonostearat

Das Glycerinmonostearat wird gaschromatographisch auf einer Kapillarsäule getrennt und mit einem Flammen-Ionisations-Detektor detektiert. Die Auswertung erfolgt nach der Methode des internen Standsrds. Die Bestimmungsgrenze liegt bei ca. 10 ppm.

phenolisches OH

Das Polycarbonat wird in Dichlormethan gelöst und mit Titan (IV)-chlorid unter Bildung eines orange-rot gefärbten Komplexes versetzt, dessen Extinktion bei 546 nm photometrisch bestimmt wird. Die Kalibrierung erfolgt mit BPA als exterem Standard. Die Bestimmungsgrenze liegt bei ca. 20 ppm OH.

## Patentansprüche

1. Optische Datenträger hergestellt aus thermoplastischen Polymergemischen enthaltend mindestens ein Polycarbonat, mindestens ein Entformungsmittel und mindestens ein Phosphit der folgenden Struktur:

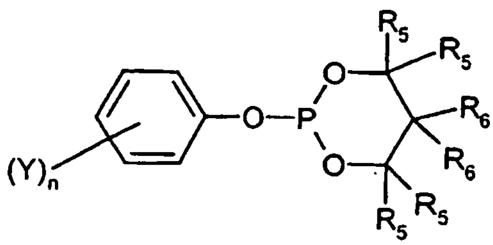

worin

n die Zahl 0-5 darstellt,
Y jeweils unabhängig voneinander Alkyl oder gegebenenfalls substituiertes Aryl bedeutet,
$R_5$ unabhängig voneinander aus der Gruppe Wasserstoff und $C_3$-$C_{20}$-Alkyl ausgewählt wird und
$R_6$ unabhängig voneinander für $C_1$-$C_{10}$ Alkyl stehen.

2. Optischer Datenträger nach Anspruch 1, wobei die Entformungsmittel Ester mehrwertiger Alkohole mit langkettigen Carbonsäuren sind, wobei die Ester mindestens noch eine freie OH-Gruppe enthalten.

3. Optischer Datenträger gemäß Anspruch 1, wobei die Entformungsmittel Teilester von gesättigten einwertigen Fettsäuren mit 16 bis 22 Kohlenstoffatomen mit Glycerin, Trimethylolpropan, Pentaerythrit oder ähnlichen mehrwertigen Alkoholen sind.

4. Optischer Datenträger gemäß den vorangehenden Ansprüchen, wobei das Polycarbonat ein Molekulargewicht von 15000 bis 35000 aufweist.

5. Optischer Datenträger gemäß den vorangehenden Ansprüchen, enthaltend 0,01 bis 1,5 Gew-% an Entformungsmittel und 0,001 - 0,1 Gew-% an Phosphit.

6. Optischer Datenträger gemäß Anspruch 1, wobei n für 1 bis 3 und jeweils unabhängig voneinander Y für $C_1$-$C_4$-alkyl stehen.

7. Optischer Datenträger gemäß Anspruch 1 und 6, wobei n für die Zahl 3 steht.

8. Optischer Datenträger gemäß Anspruch 1, 6 oder 7, wobei Y jeweils unabhängig voneinander Methyl, sec.- Butyl und tert- Butyl bedeutet.

## Claims

1. Optical data carriers produced from thermoplastic polymer mixtures containing at least one polycarbonate, at least one mould release agent and at least one phosphite of the following structure:

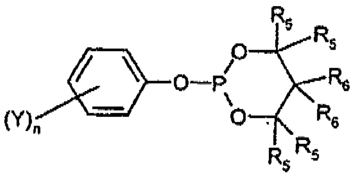

wherein

n is a number from 0 to 5,
Y, independently of one another in each case, is alkyl or optionally substituted aryl,
$R_5$ are selected independently of one another from the group containing; hydrogen and $C_3$-$C_{20}$ alkyl, and
$R_6$ independently of one another are $C_1$-$C_{10}$ alkyl.

2. Optical data carrier according to claim 1, wherein the mould release agents are esters of polyhydric alcohols with long-chain carboxylic acids, the esters further containing at least one free OH group.

3. Optical data carrier according to claim 1, wherein the mould release agents are partial esters of saturated monohydric fatty acids containing 16 to 22 carbon atoms with glycerol, trimethylol propane, pentacrythritol or similar polyhydric alcohols.

4. Optical data carrier according to any one of the preceding claims, wherein the polycarbonate has a molecular weight of 15,000 to 35,000.

5. Optical data carrier according to any one of the preceding claims, containing 0.01 to 1.5 % by weight of mould release agents and 0.001 to 0.1 % by weight of phosphite.

6. Optical data carrier according to claim 1, wherein n is 1 to 3, and Y, independently of one another in each case is $C_1$ to $C_4$ alkyl.

7. Optical data carrier according to claim 1 and claim 6, wherein n is the number 3.

8. Optical data carrier according to claim 1, claim 6 or claim 7, wherein Y, independently of one another in each case, is methyl, see.-butyl and tert.-butyl.

## Revendications

1. Supports de données optiques fabriqués à partir de mélanges polymères thermoplastiques contenant au moins un polycarbonate, au moins un agent de démoulage et au moins un phosphite présentant la structure suivante

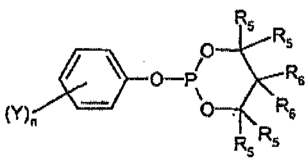

dans laquelle

n représente un nombre compris entre 0 et 5,
les Y correspondent, dans chaque cas indépendamment les uns des autres, à un alkyle ou à un aryle le cas échéant substitué,
les $R_5$ sont sélectionnés indépendamment les uns des au tres parmi le groupe constitué de l'hydrogène et de l'alkyle en $C_3$-$C_{20}$ et

les $R^6$ représentent indépendamment les uns des autres un alkyle en $C_1$-$C_{10}$.

**2.** Supports de données optiques selon la revendication 1, dans lesquels les agents de démoulage sont des esters d'alcools polyvalents avec des acides carboxyliques à chaîne longue, les esters contenant encore au moins un groupe OH libre.

**3.** Supports de données optiques selon la revendication 1, dans lesquels les agents de démoulage sont des esters partiels d'acides gras saturés monovalents comportant 16 à 22 atomes de carbone avec de la glycérine, du triméthylolpropane, du pentaérythrite ou des alcools polyvalents similaires.

**4.** Supports de données optiques selon les revendications précédentes, dans lesquels le polycarbonate présente un poids moléculaire compris entre 15 000 et 35 000.

**5.** Supports de données optiques selon les revendications précédentes contenant 0,01 à 1,5 % en poids d'agent de démoulage et 0,001 à 0,1 % en poids de phosphite.

**6.** Supports de données optiques selon la revendication 1, dans lesquels n représente un nombre compris entre 1 et 3 et les Y correspondent, dans chaque cas indépendamment les uns des autres, à un alkyle en $C_1$-$C_4$.

**7.** Supports de données optiques selon les revendications 1 et 6, dans lesquels n représente le nombre 3.

**8.** Supports de données optiques selon les revendications 1, 6 ou 7, dans lesquels les Y correspondent, dans chaque cas indépendamment les uns des autres, à un méthyle, à un sec-butyle et à un tert-butyle.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 205192 A
- JP 62184639 A
- JP 2000080261 A
- DE 19925125 A
- US 3028635 A
- US 2999835 A
- US 3148172 A
- US 2991273 A
- US 3271367 A
- US 4982014 A
- US 2999846 A
- DE 570703 A1
- DE 2063050 A1
- DE 2036052 A1
- DE 2211956 A1
- DE 3832396 A1
- FR 1561518
- JP 61062039 A
- JP 61062040 A
- JP 61105550 A
- EP 0038876 A1
- EP 702018 A
- EP 635514 A
- US 4325863 A
- US 4338244 A
- US 5175312 A
- US 5216052 A
- US 5252643 A
- DE 4316611 A
- DE 4316622 A
- DE 4316876 A
- EP 0589839 A
- EP 0591102 A


### In der Beschreibung aufgeführte Nicht-Patentliteratur


- Chemistry and Physics of Polycarbonates. **SCHNELL.** Polymer Reviews. Interscience Publishers, 1964, vol. 9
- Polycarbonates. **D. FREITAG ; U. GRIGO ; P.R MÜLLER ; H. NOUVERTNE ; BAYER AG.** Encyclopedia of Polymer Science and Engineering. 1988, vol. 11, 648-718
- Polycarbonate. **DRES. U. GRIGO ; K. KIRCHNER ; P.R. MÜLLER.** Becker/Braun, Kunststoff-Handbuch. Carl Hanser Verlag, 1992, vol. 3/1, 117-299
- **H. SCHNELL.** Chemistry and Physics of Polycarbonates. Interscience Publishers, 1964
- **JOHN MURPHY.** Additives for Plastics Handbook. 1999
- Plastics Additives Handbook. Hanser Verlag, 1990, 775-789